# EUROPEAN PATENT APPLICATION

(11) **EP 4 516 473 A1**
(43) Date of publication of application: **05.03.2025**
(21) Application number: 23193681.6
(22) Date of filing: 28.08.2023
(51) Int. Cl.: B29B 11/16, B29C 33/02

(54) **MOULD ARRANGEMENT AND METHOD FOR PRODUCING A COMPOSITE PREFORM**

(71) Applicant: Siemens Gamesa Renewable Energy A/S, 7330 Brande (DK)
(72) Inventor: Gungor, Sila, 9000 Aalborg (DK); Ischtschuk, Lars, 9200 Aalborg (DK); Mateu, Alfredo Esbri, 6580 Vamdrup (DK); Skjoelstrup, Enok Johannes Haahr, 9220 Aalborg Øst (DK); Thomsen, Claus, 9440 Aabybro (DK)
(74) Representative: SGRE-Association

(57) **Abstract**

Mold arrangement for producing composite preform elements for rotor blades of wind turbine built with preform building materials (7) comprising several fiber mats layers and/or sandwich core materials like balsa or polymer foams fixed by a meltable binder, comprising
- a mold (2) with a mold surface (4) defining the shape of the preform element, on which mold the preform building material (7) is arranged,
- a flexible, electrically conductive, foil-like heating element (5, 5a, 5b, 5c) arranged or to be arranged at the mold (2) for heating the preform building material (7) from below,
- a heating blanket (10) or a further flexible, electrically conductive, foil-like heating element to be arranged on the mold for covering the preform building material and for heating it from above.

## Description

The invention refers to a mold arrangement for producing a composite preform element built with preform building material comprising several fiber mat layers fixed by a meltable binder.

A composite preform element is a prefabricated item which is used for building a pre-fabricated product together with other composite preform elements or other building pieces. An example is the production of a blade for a wind turbine, which blade is usually, among others, built with a number of such composite preform elements, which are used for building the respective blade shell. This example is not restricting, as such preform elements may also be used for building other products.

The composite preform element usually comprises several fiber mat layers for example made of glass, carbon or other fiber material, which layers are fixed together with a binder. The binder is usually either already adhered to the fiber mats or is used as a powder spreaded over the layer stack. The binder is activated by heating the preform building material and melts, which allows that the individual fiber mat layers and any optional arranged core material, usually made of balsa or foam placed between the fiber layers in the stack, are sticked together after the binder has cooled down under its specific glass transition temperature.

The reason for heating the building material is that the heat activates the binder, so that the binder, after reaching a specific temperature, melts and glues the layers respectively core elements to consolidate them in a one-piece preform element after it has been cooled down under its specific glass transition temperature. This consolidation step may also involve the application of a compacting pressure for example with vacuum, which for example ensures that the preform element building material is pressed together when the binder is activated.

Usually, a mold arrangement is used for producing the composite preform element, as such a preform element needs to have a specific shape. Such a mold arrangement usually comprises a mold with a mold surface defining the shape of the preform element, on which mold surface the preform building material is arranged. For heating the material in order to activate the binder, the material, which may be arranged in a vacuum bag, is covered with a heating blanket, which is arranged on the mold and extends over the whole building material respectively covers the whole mold, so that heat can be transferred from the heating blanket to the building material. This heating blanket allows for heating the building material from the top. To avoid an inhomogeneous heating over the cross section of the material arrangement respectively to avoid an overheating of the top layers, it is known to also apply heat to the building material from underneath. Usually, the mold itself comprises heating means like heating pipes through which hot water flows, or electric wires for a resistance heating. These pipes or wires are usually arranged underneath the mold, although in direct contact. But it takes too long to heat up and cool down the mold to the required temperature during the production process. Further, the mold setup is expensive, as the mold itself needs to be equipped with the pipe or wire arrangement.

The object of the invention is to provide an improved mold arrangement.

For addressing the object, the invention refers to a mold arrangement for producing a composite preform element built with preform building material comprising several fiber mat layers fixed by a meltable binder, comprising
- a mold with a mold surface defining the shape of the preform element, on which mold the preform building material is arranged,
- a flexible, electrically conductive, foil-like heating element arranged or to be arranged on the mold for heating the preform building material from below,
- a heating blanket or a further flexible, electrically conductive, foil-like heating element to be arranged at the mold for covering the preform building material and for heating it from above.

The inventive mold arrangement comprises a mold with a mold surface, which may for example be trough-like for producing a preform building element for a wind turbine blade. Such a mold has a length of several meters, for example 10 - 12 m, and a width of for example 1 - 4 m, which exemplary figures does not limit the mold to these figures, as the mold can also be shorter or longer or narrower or wider than the above-mentioned figures. The mold surface defines the shape of the preform element. The preform building material is arranged on the mold, wherein the mold surface defines the shape of the finally produced preform element. Vacuum means may be provided to apply a vacuum to the stack for pressing the material against the mold surface and for fixating and shaping it.

The mold arrangement further comprises a flexible, electrically conductive, foil-like heating element, which is arranged, or which is to be arranged at the mold for heating the preform building material from below. Instead of a heating blanket, which is preferably used for heating from above, the heating element for heating from below is a flexible, electrically conductive and foil-like element. It is a very thin element, for example having a thickness of 3 mm or less. It is a very thin and flexible element, compared to a heating blanket, which is remarkably thick, as it is usually made of a number of separate layers like a surface layer for example made of silicon impregnated fabric, a glass fiber insulation with several millimeters thickness, which is sued in, and several heating cables, which are also sued in. The blanket thickness prevents the use of such a blanket for the underneath heating, as, when such a blanket is directly placed on the mold surface, the surface shape gets lost due to the blanket thickness, resulting in a preform element which does not correspond to the intended shape. The invention, to the contrary, proposed to use a very thin and flexible foil-like heating element, which is electrically conductive over almost its entire area. Such a thin heating element, which, as mentioned, preferably has a thickness of less than 3 mm, can easily be arranged directly on the shaped defining mold surface and exactly follows this shape, so that also the building material, even if vacuum packed, exactly adapts to the mold shape, allowing for the production of preform elements with the intended shape.

By using such a foil-like thin heating element it is possible to provide a perfect heating from below, wherein the heat is directly applied to the building material, just like with the top heating using the blanket or another such foil-like thin heating element, where the heat is also almost directly transferred to the building material. The inventive use of the flexible, thin foil-like heating element further allows for using a simple mold, which does not need to be equipped with heating means like heating pipes or electric wires. This makes the setup of the mold arrangement simpler and less cost intensive.

The mold arrangement further comprises a heating blanket or a further flexible, electrically conductive, foil-like heating element, which is afterwards arranged at the mold and which covers the preform building material, which may, as mentioned, be possibly packed in a vacuum bag. This heating blanket or a flexible, electrically conductive, foil-like heating element allows for heating the preform building material from above.

According to a first embodiment the heating element (the same is true when a further foil-like heating element is used for the top heating) may be a polymer foil made of a matrix building polymer with embedded electrically conductive particles. The polymer matrix may be of any appropriate thermoplastic or polymer. In this matrix electrically conductive particles are embedded, which particles are preferably homogeneously distributed to ensure a homogeneous heating over the whole foil area. Examples for such particles are electrically conductive nano or micro particles of carbon black, carbon nanotubes, graphene or MXenes, which examples are not restricting. The amount of particles embedded in the matrix is appropriately chosen, so that the foil shows a sufficient specific conductivity which allows for a sufficient electric heating. Certainly, the foil is equipped or connected to respective connection electrodes.

A main advantage of such an electrically conductive foil is that its shape may be chosen according to the need, so that it is easily possible to adapt the shape to the shape or dimensions of the mold etc. It is possible to slit or punch or cut the polymer foil without destroying it or without influencing the conductivity or creating shortcuts etc.

According to a second embodiment, the heating element (again the same is true for the further foil-like heating element for the top heating) is a foil made of thin metal, or made of conductive fibers like metal, carbon or or conductive thermoplastics, where the fibers are e.g. stitched on a textile carrier or fabricated as a mesh. In this embodiment a thin metal foil is used as the heating element, which foil is a thin one-piece metal sheet. In an alternative, the heating element may also be made of metal fibers or carbon fibers which are stitched on a carrier, for example a textile carrier. This fiber arrangement also has a foil-like character, as it shows a thickness, as mentioned, of 3 mm or less and therefore perfectly adapts to the shape of the mold surface. The metal or the metal fibers may be made of copper, silver, nickel, gold or a combination of at least two of them. The numeration does not limit the invention to only these materials. Instead, any other highly conductive metals or their alloys may be used.

In another alternative the heating element is made of electrically conductive wires printed on a carrier, especially a polymer foil or a textile carrier. According to this embodiment the foil-like heating elements is produced by additive manufacturing. For manufacturing the heating element a conductive material including inks, polymers, nanocomposites, metallic materials, or hybrid precursors can be deposited onto a carrier, preferably a polymer film or a textile carrier or substrate. Depending on the material type fused filament fabrication, screen printing, lithography or inkjet can be regarded as alternative manufacturing techniques to create conductive paths on the carrier like the polymeric film (for example, and not limiting, polyurethane) or the textile-based substrate. Conductive inks consist of metallic, or carbon nanoparticles or nanotubes and are promising materials in terms of its fast and easy application. It is possible to customize the wiring pattern and its dimension according to specific requirements, for example for regulating the temperature in local areas with different kinds of heating zones. The density of the wires respectively the distance between two neighboring wires may vary between a specific heating zone and other areas or even within a heating zone, depending on the requested heating pattern. Also, the specific wire wiring pattern may broadly vary. The wires may run in only one direction and mainly in parallel, or they may be arranged in a curved or spiral or circular pattern or the like. Moreover, it is also possible to integrate sophisticated electronic components like temperature sensors and controlling elements. This innovative technology would offer the possibility to customize the foil-like heating elements to the specific demands and deeds.

The carrier with the printed wires is preferably covered for protecting the wires and for avoiding shortcuts. The cover may be any kind of appropriate cover like another thin foil or textile element, or a casted polymer cover. The cover may comprise reinforcement fibers like glass fibers, which may also be embedded in the base carrier.

As mentioned, the foil-like heating element, no matter which of the above-mentioned embodiment, has a little thickness of less than 3 mm. Preferably, the thickness is less than 1 mm, and most preferably less than 0,5 mm. A thickness of 1,0 mm or even less provides for a very high flexibility, which allows for a perfect draping of the heating element on the mold surface.

A protection cover, even when it is thin as possible, is needed on both sides to avoid electrical short cuts and electrical shocks of the operating employees. Nevertheless, it is possible that the foil-like heating element also comprises a carrier foil made of a polymer, to which carrier foil the polymer foil or the metal foil or the foil-like mesh is attached. Such a carrier foil may be provided, when the polymer foil or the metal foil etc. has a thickness of for example less than 1 mm or even less than 0,5 mm. The carrier foil itself may have a thickness also of less than 1 mm. The thinner the carrier foil, the thinner and the more flexible is the heating element. In case of a heating element in the form of a metal foil or a woven fiber mesh, the foil or the foil-like mesh may also be embedded in a polymer carrier matrix. This polymer matrix covers the metal foil respectively fibers for e.g., stitched on a textile carrier or a mesh itself.

The thickness of the foil is depending on the used protection matrix material and its properties so that the embedded heating element is protected against wear and tear and protects against short cuts respectively electrical shock of the user. The foil-like heating element should show a specific electric conductivity of 100 - 1000 S/m, preferably of 250 - 750 S/m. In addition to a high conductivity, a homogeneous heat distribution in all areas of the heating element should be achieved, for example by a homogeneous distribution of the above-mentioned conductive particles. This ensures that the heating is homogeneous over the whole area of the heating element and therefore the whole preform building material, as no local heat peaks are given respectively no heat sinks are given. When using a one-piece metal foil, a homogeneous heating is certainly also possible, the same holds true when using a finely woven mesh and/ conductive fibers arranged on a textile carrier.

Preferably, the foil-like heating element is arranged directly on the mold surface by using fixation means, so that the foil-like heating means remains in place when draped on the mold, even when the building material is placed on the heating element. The fixation means may comprise gluing, taping, vacuum fixation or attachment means like Velcro elements. The fixation means preferably allow for an easy detachment of the foil-like heating element for repair or replacement purpose. The numeration is not limiting, as any appropriate fixation means can be used.

In an alternative of arranging the foil-like heating element directly on the mold surface it is also possible that the foil-like heating element is sandwiched between two mold sheets building the mold. The mold may for example be built from two mold sheets, which for example have the same shape so that they can be arranged in a form-fit manner. The upper mold sheet, which provides the mold surface, may be pretty thin, so that the foil-like heating element sandwiched between the mold sheets is very close to the mold surface and a very fast heating transfer is possible.

Finally, it is also possible to arrange the foil-like heating element underneath the mold and to fix it directly to the bottom side of the mold. This arrangement is possible, when the mold itself is pretty thin or made of a material which provides a good heat transfer.

Finally, the mold arrangement according to the invention may be adapted to produce preform elements for a wind turbine blade. This mold arrangement therefore is preferably of rectangular shape having a length of several meters, for example 10 m or more, and a width of several meters, for example 1 - 4 m, depending on the shape of preform elements to be built. Nevertheless, the mold arrangement is neither restricted to a rectangular shape nor to the dimensions respectively mentioned figures.

The invention further refers to a method for producing a composite preform element using a mold arrangement as mentioned above, wherein the preform building material arranged at the mold is simultaneously heated by the heating blanket or the flexible, electrically conductive, foil-like heating element from above and by the foil-like heating element from below.

Further, according to the inventive method, the foil-like heating element is place on the mold surface, whereafter the preform building material is placed on the foil-like heating element, whereafter the heating blanket or a further foil-like heating element is placed on the preform building material, whereafter preferably a vacuum is drawn between the mold respectively the heating element and the heating blanket or the flexible, electrically conductive, foil-like heating element or a vacuum cover encasing the preform building material, whereafter the heat is applied by the foil-like heating element and the heating blanket or the flexible, electrically conductive, foil-like heating element.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a principle illustration of an inventive mold arrangement,
- Fig. 2: a principle cross section of a foil-like heating element of a first embodiment,
- Fig. 3: a principle cross section of a foil-like heating element of a second embodiment,
- Fig. 4: a principle cross section of a foil-like heating element of a third embodiment,
- Fig. 5: a principle cross section of a foil-like heating element of a fourth embodiment,
- Fig. 6: a principle illustration of a mold in a partial view with the foil-like heating element being sand-wiched between two mold sheets, and
- Fig. 7: a principle illustration of another inventive mold arrangement

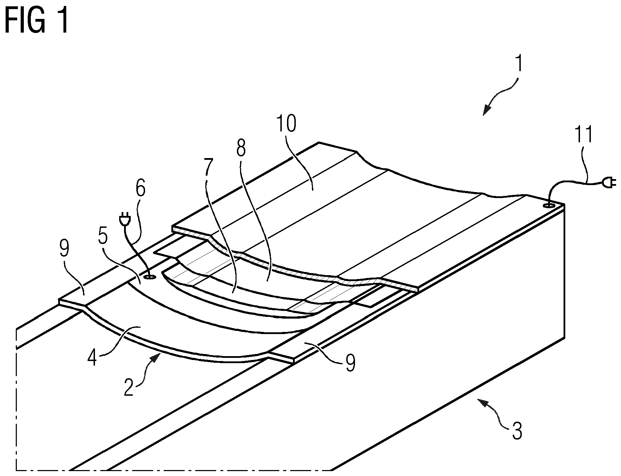

Fig. 1 shows an inventive mold arrangement 1, comprising a mold 2 arranged on a mold carrier 3. The mold 2 comprises a mold surface 4 which in this embodiment is trough-like. On the mold surface 4 a foil-like heating element 5 is arranged, which for example has a thickness of less than 3 mm, preferably of less than 2 mm and most preferably of less than 1 mm, which figures are not restricting the invention to these dimensions. The heating element 5 covers preferably the whole mold surface 4. It can be connected to a power source by means of a connection device 6 as shown in principle, so that the foil-like heating element can be electrically heated. For this purpose, the foil-like heating element 5 is electrically conductive, so that a resistance heating is possible. Several embodiments of such a heating element will be described later.

As the heating element 5 is very thin and flexible, it can easily adapt exactly to the shape of the mold surface 4.

On the foil-like heating element 5 preform building material 7 comprising several fiber mat layers made of glass, carbon or other fibers and, if needed, one or more core elements made e.g. of balsa wood or polymer foam are arranged, together with some binder. The binder may be applied in powder form or may already adhere to the fiber mat layers or may be provided in a form of a thin foil layer which is sandwiched between neighbouring fiber mat layers. The preform building material may for example be adapted to build a preform element for a wind turbine blade, but the invention is not restricted to this type of preforms, as such preforms may also be used in other industries.

After placing the preform building material 7 on the foil-like heating element 5, a vacuum cover 8 is arranged at the mold 2, which vacuum cover 8 covers the heating element 5 and the building material 7. The vacuum cover 8 extends to the edges 9 of the mold 2, where it is airtight fixed to the mold 2, so that a vacuum can be drawn between the mold 2 and the vacuum cover 8. This vacuum compresses the preform building material 7 and shapes it against the mold surface 4, so that the preform building material 7 exactly adapts to the defined shape.

Finally, a heating blanket 10 is placed on top of this arrangement covering the vacuum cover 8. The heating blanket 10 extends over the whole mold 2. It can be connected to a power source by means of a connection device 11, so that also the heating blanket 10 can be electrically heated. Instead of such a heating blanket, a second flexible, electrically conductive, foil-like heating element comparable to the heating element 5 can be used.

For fixating the fiber mat layers and, if provided, the core elements it is necessary to activate the binder for melting it, which allows that the individual fiber mat layers and any optional arranged core material, usually made of balsa or foam placed between the fiber layers in the stack, are sticked together after the binder has cooled down under its specific glass transition temperature. For activating the binder heat is supplied both by the lower heating element 5 and the upper heating blanket 10, so that heat is transferred to the preform building material 7 directly from both sides. This significantly reduces the heating time for activating the binder and therefore the time for producing the preform element.

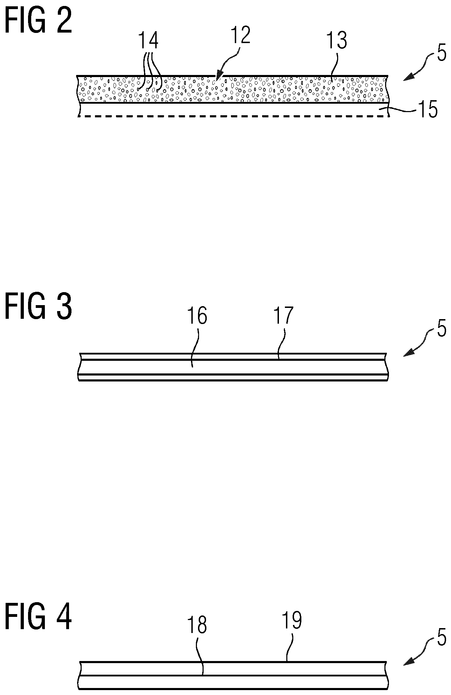

Figures 2 - 4 show several embodiments of flexible, electrically conductive and foil-like heating elements 5. Fig. 2 shows a first embodiment, in which the heating element 5 is a polymer foil 12 made of a matrix building polymer 13 with embedded electrically conductive particles 14. The polymer building the matrix may be any suitable thermoplastic or polymer. The particles 14, which are nanoparticles or microparticles, are for example particles of carbon black, carbon nanotubes, graphene or MXenes. Any electrically conductive particle type may be used, as long as it provides a respective electric conductivity of the polymer foil 12, so that it can be resistance heated.

The dashed line shows the possibility to provide an additional carrier layer 15, which is preferably also made of a polymer, preferably the same polymer the matrix 13 is made of. This carrier foil is optional.

The thickness of the polymer foil 12 (without any additional carrier foil 15) is preferably less than 3 mm, preferably less than 2 mm and most preferably less than 1 mm. It is also possible to even further reduce the thickness down to 0,5 mm or less. The thickness of any additional carrier layer 15 is also as small as possible. Preferably, the overall thickness of the heating element 5, either comprising only the polymer foil 12 or an additional carrier layer 15, should not be more than 3 mm.

To ensure a homogeneous temperature distribution over the area of the polymer foil, the electrically conductive particles 14 are homogeneously distributed within the matrix 13, so that the conductivity and therefore the temperature is the same over the whole element area. The foil-like heating element 5 should have a specific electric conductivity of 100 - 1000 S/m, preferably of 250 - 750 S/m

Fig. 3 shows another embodiment of a heating element 5. The heating element 5 is made of a metal foil 16, which is for example made of copper, silver, nickel, gold or other conductive metals and their alloys. The thickness of this metal foil is also as thin as possible. In this case, due to the conductivity of this metal foil, thicknesses of less than 1 mm or even less than 0,5 mm are preferable.

The metal foil 15 may for example be embedded in a polymer carrier matrix 17 covering both sides of the metal foil 16, which polymer carrier matrix also acts as a protection layer.

Finally, fig. 4 shows a third embodiment of a foil-like heating element 5, which comprises fibers 18 made of metal, carbon or other highly conductive materials, where the fibers are e.g. stitched on a textile carrier (not shown). As metal fibers, again, fibers made of copper, silver, nickel or gold or any appropriate metal and their alloys based on one of these materials may be used. The fibers 18 in this embodiment respectively the carrier is also embedded in a polymer carrier matrix 19for protecting it. Again, the thickness of the heating element 5 should be as thin as possible, preferably 5 mm or even less.

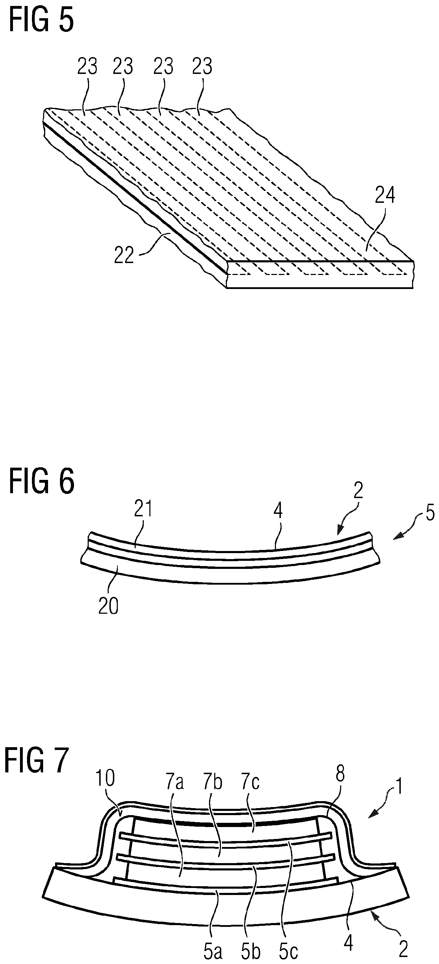

Fig. 5 shows an embodiment of a foil-like heating element 5, comprising a carrier 22, onto which wires 23 are printed, which are covered by a protective cover 24, so that they are embedded. The wires 23 are made of an appropriate conductive material including inks, polymers, nanocomposites, metallic materials, or hybrid precursors. The carrier 22 may be any appropriate substrate like a polymer foil (for example polyurethane), or a textile carrier. The cover 24 may also be any kind of appropriate cover, like another polymer film or another textile cover, or even a casted polymer sheet.

As shown, the wires 23 may be parallel to each other, but they may certainly run in different directions or have different geometrical shapes, as they may be curved or circular or the like. Further, the density respectively the distance between two wires 23 may be constant or, as shown, vary in order to realize different heating zones having different wire geometries or densities. The same holds true for the width of the respective wires 23, it may be the same over the whole heating element or vary locally. The final wire pattern may be chosen upon the respective requested heating pattern, which may depend on the specific item to be produced.

For arranging the heating element 5 on the mold surface 4, no matter of the type of the heating element 5, it is possible to use appropriate fixation means to fixate it on the mold surface 4. This is especially advantageous, when the heating element 5 is permanently arranged on the mold surface 4. Appropriate fixation means comprise gluing, taping, stapling, vacuum fixation or any other appropriate attachment elements like Velcro elements or the like. Preferably, the fixation means allow for an easy detachment of the heating element 5 for repair or replacement purpose.

Fig. 5 finally shows an embodiment of the mold 2, in which the heating element 5 is integrated in the mold 2 by sandwiching it between a lower mold sheet 20 and an upper mold sheet 21. The lower mold sheet 20 provides the overall stability of the mold 2. It is much thicker than the upper mold sheet 21, which is only a cover for the heating element 5, and which provides the mold surface 4. As the upper mold sheet 21 is very thin, preferably having a thickness of only some millimeters, it is quickly heated, when the heating element 5 is active, so that the heat from the heating element 5 can quickly and easily be applied to the preform building material 7 arranged on the mold surface 4. Although not shown, it is possible to arrange the heating element 5 underneath the mold 2 at its bottom side. But in this case, it is necessary to heat the whole mold, which takes more time.

Fig. 6 finally shows another mold arrangement 1, again comprising a mold 2 having a mold surface 4, on which in this embodiment a first flexible, electrically conductive, foil-like heating element 5a is arranged. On this heating element 5a first preform building material 7a is arranged. This material 7a is covered by a second flexible, electrically conductive, foil-like heating element 5b. On this heating element 5b second preform building material 7b is arranged, which again is covered by a third flexible, electrically conductive, foil-like heating element 5c. On this heating element 5c third preform building material 7c is arranged. The whole stack is covered by a vacuum cover 8, which is covered by a heating blanket 10, or alternatively by a fourth heating element. It is obvious that it is possible to build several one preform elements simultaneously, as the very thin heating elements 5a, 5b, 5c allow for sandwiching such a heating element between two preform building material stacks, due to the small thickness of only several millimeters or less of such a heating element. The arrangement of the various heating elements 5a, b, c and of the heating blanket allows for a direct heating of all preform building material 7a, 7b, 7c from both sides, so that a perfect heating and binder activation can be achieved in each material stack.

Finally, it is also possible to, additionally, separate the respective stacks of the preform building material 7a, 7b, 7c by additional vacuum covers, so that a specific vacuum can also be drawn in the respective sections or volumes.

Finally, it is also possible to use heat shields and place them at certain location above or below the preform building material, for example when the preform building material tapers at one or more of its edges, so that there is less material than in other areas. Such a thinner area requires less heat exposure than thicker areas, which heat exposure can be controlled by using heat shields.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Mold arrangement for producing composite preform elements for rotor blades of wind turbine built with preform building materials (7) comprising several fiber mats layers and/or sandwich core materials like balsa or polymer foams fixed by a meltable binder, comprising
- a mold (2) with a mold surface (4) defining the shape of the preform element, on which mold the preform building material (7) is arranged,
- a flexible, electrically conductive, foil-like heating element (5, 5a, 5b, 5c) arranged or to be arranged at the mold (2) for heating the preform building material (7) from below,
- a heating blanket (10) or a further flexible, electrically conductive, foil-like heating element to be arranged on the mold for covering the preform building material and for heating it from above.

2. Mold arrangement according to claim 1, **characterized in that** the heating element (5, 5a, 5b, 5c) is a polymer foil made of a matrix building polymer (13) with embedded electrically conductive particles (14).

3. Mold arrangement according to claim 2, **characterized in that** the matrix building polymer (13) comprises highly conductive particles (14) like carbon black, carbon nanotubes, graphene or MXenes.

4. Mold arrangement according to claim 2 or 3, **characterized in that** the particles (14) are homogeneously distributed.

5. Mold arrangement according to claim 1, **characterized in that** the heating element (5, 5a, 5b, 5c) is a foil (16) made of metal or made of metal, carbon or conductive thermoplastic fibers (18) fixed to a carrier, preferably a textile carrier.

6. Mold arrangement according to claim 5, **characterized in that** the metal or metal fibers are copper, silver, nickel, gold or a combination of at least two of them.

7. Mold arrangement according to one of the claims 2 to 6, **characterized in that** the foil-like heating element (5, 5a, 5b, 5c) comprises a carrier foil (15) made of a polymer, to which carrier foil (15) the polymer or metal foil (16) or the metal, carbon or conductive thermoplastic fibers (18) fixed to the carrier are attached, or that the metal foil (16) or the metal, carbon fibers or conductive thermoplastic (18) fixed to the carrier are embedded in a polymer carrier matrix (19).

8. Mold arrangement according to claim 1, **characterized in that** the heating element is made of electrically conductive wires printed on a carrier, especially a polymer foil or a textile carrier.

9. Mold arrangement according to one of the preceding claims, **characterized in that** the foil-like heating element (5, 5a, 5b, 5c) has a thickness of less than 3 mm, preferably of less than 1,0 mm and especially less than 0, 5 mm.

10. Mold arrangement according to one of the preceding claims, **characterized in that** the foil-like heating element (5, 5a, 5b, 5c) has a specific electric conductivity of 100 - 1000 S/m, preferably of 250 - 750 S/m.

11. Mold arrangement according to one of the preceding claims, **characterized in that** the foil-like heating element (5, 5a, 5b, 5c) is arranged directly on the mold surface (4) by using fixation means.

12. Mold arrangement according to claim 11, **characterized in that** the fixation means comprise gluing, taping, stapling, vacuum fixation or attachment elements, preferably Velcro elements.

13. Mold arrangement according to one of the claims 1 to 10, **characterized in that** the foil-like heating element (5, 5a, 5b, 5c) is sandwiched between two mold sheets (20, 21) building the mold (2) or is arranged underneath the mold (2) and fixed directly to the bottom side of the mold (2).

14. Mold arrangement according to one of the preceding claims, **characterized in that** it is adapted to produce preform elements for a wind turbine blade.

15. Method for producing a composite preform element using a mold arrangement (1) according to one of the preceding claims, wherein the preform building material (7) arranged at the mold (2) is simultaneously heated by the foil-like heating element (5) from below and by the heating blanket (10) or the foil-like heating element from above.

16. Method according to claim 15, **characterized in that** the foil-like heating element (5) is placed on the mold surface, whereafter the preform building material is placed on the foil-like heating element (5), whereafter the heating blanket (10) or a further foil-like heating element is placed on the preform building material (7), whereafter preferably a vacuum is drawn between the mold (2) respectively the heating element (5) and the heating blanket (10) respectively the further foil-like heating element or a vacuum cover (8) covering or encasing the preform building material (7), whereafter the heat is applied by the foil-like heating element (5) and the heating blanket (10) or the further heating element (5).
